(19) Europäisches Patentamt
European Patent Office
Office européen des brevets

(11) **EP 2 148 100 B1**

(12) **EUROPÄISCHE PATENTSCHRIFT**

(45) Veröffentlichungstag und Bekanntmachung des Hinweises auf die Patenterteilung:
**17.10.2012   Patentblatt 2012/42**

(51) Int Cl.:
***F16B 37/12*** *(2006.01)*   ***F16B 39/02*** *(2006.01)*
***F16B 39/20*** *(2006.01)*

(21) Anmeldenummer: **09165004.4**

(22) Anmeldetag: **09.07.2009**

(54) **Verankerungselement**

Anchoring element

Elément d'ancrage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.07.2008   DE 102008040694**

(43) Veröffentlichungstag der Anmeldung:
**27.01.2010   Patentblatt 2010/04**

(73) Patentinhaber: **HILTI Aktiengesellschaft
9494 Schaan (LI)**

(72) Erfinder:
• **Bianchi, Pietro
9473 Gams (CH)**

• **Tognini, Roger
9435 Heerbrugg (CH)**
• **Sander, Bernhard
81379 München (DE)**
• **Lutz, Clemens
9470 Buchs (CH)**
• **Appl, Jörg
9470 Buchs (CH)**
• **Konrad, Walter
8733 Eschenbach (AT)**

(56) Entgegenhaltungen:
**EP-A- 1 122 449     WO-A-2008/016552**

**Beschreibung**

Die Erfindung betrifft ein Verankerungselement zur Anordnung an einem mit einer Aussenprofilierung versehenen Schaft eines Befestigungselementes mit einer Durchführöffnung für den Schaft. Ein derartiges Verankerungselement ist aus der EP 1 122 449 A2 bekannt. Weiter betrifft die Erfindung eine mittels einer aushärtbaren Masse in einem Bohrloch verankerbare Befestigungsvorrichtung, die zumindest ein derartiges Verankerungselement aufweist, sowie eine Befestigungsanordnung mit einer derartigen Befestigungsvorrichtung.

Es ist bekannt, Befestigungselemente mit einem eine Aussenprofilierung aufweisenden Schaft mittels einer aushärtbaren Masse, welche vor dem Einführen oder nach dem Einführen des Befestigungselementes in das Bohrloch in dieses eingebracht wird, chemisch im Bohrloch zu verankern. Das Befestigungselement ist beispielsweise eine Gewindestange, die über ihre gesamte Längserstreckung mit einem Gewinde als Aussenprofilierung versehen ist. Wird dieses Befestigungselement chemisch verankert, kann das Versagen des Befestigungspunktes entlang des Kontaktbereichs zwischen dem Schaft und der ausgehärteten Masse oder aber entlang des Kontaktbereichs zwischen der Bohrlochwandung und der ausgehärteten Masse auftreten.

Durch Reinigung des Bohrlochs und insbesondere der Bohrlochwandung kann die Haftung der ausgehärteten Masse an der Bohrlochwandung und somit die Verankerung des Befestigungselementes im Bohrloch verbessert werden. Die Reinigung des Bohrlochs stellt einen zusätzlichen Arbeitsaufwand dar, welcher zudem für ein vorteilhaftes Ergebnis separate Hilfsmittel erfordert, die dem Anwender nicht immer zur Verfügung stehen.

Aus der DE 24 23 433 A1 ist ein mittels einer aushärtbaren Masse in einem Bohrloch verankerbares Befestigungselement in Form eines Ankerstabs bekannt, der in einem gewindefreien Abschnitt radial abragende Borsten aufweist, welche beim Einführen des Befestigungselementes in das mit der aushärtbaren Masse befüllten Bohrloch die Wandung des Bohrlochs reinigen.

Nachteilig an der bekannten Lösung ist, dass das Befestigungselement erst nach dem Aushärten der aushärtbaren Masse belastbar ist.

Aus der US 1,688,087 ist eine mittels einer aushärtbaren Masse in einem Bohrloch verankerbare Befestigungsvorrichtung bekannt, die ein Befestigungselement mit einem Schaft, der als Aussenprofilierung ein Gewinde aufweist, sowie mehrere ringscheibenförmige Verankerungselemente mit jeweils einer Durchführöffnung für den Schaft aufweist. Die Verankerungselemente weisen jeweils einen Aussendurchmesser auf, der grösser als der Nenndurchmesser des Bohrlochs ist. Die Befestigungsvorrichtung wird in das Bohrloch eingeführt. Die ringscheibenförmigen Verankerungselemente schaffen eine mechanische Verankerung des Befestigungselementes im Bohrloch bis die beispielsweise vor oder nach dem Einführen der Befestigungsvorrichtung eingebrachte aushärtbare Masse für eine Verankerung der Befestigungsvorrichtung im Bohrloch ausreichend ausgehärtet ist. Zudem bewirken die Verankerungselemente eine Bewehrung der ausgehärteten Masse, was zusätzlich höhere Auszugswerte ermöglicht.

Nachteilig an der bekannten Lösung ist, dass aufgrund der Aussenprofilierung des Schafts die ringscheibenförmigen Verankerungselemente im angeordneten Zustand leicht zu einer in Bezug auf die Schaftlängsachse senkrechte Ebene geneigt sind, weshalb der aus dem Bohrloch ragende Schaftabschnitt nach dem Setzen der Befestigungsvorrichtung nicht senkrecht von der Oberfläche des Bauteils abragt. Eine nachträgliche Justierung des Schafts ist, wenn überhaupt, nur bedingt möglich, da diese entgegen einer von dem zumindest einen Verankerungselement erzeugten Gegenkraft erfolgen muss.

Aufgabe der Erfindung ist es, einerseits ein Verankerungselement zu schaffen, das einfach an einem Befestigungselement mit einem mit einer Aussenprofilierung versehenen Schaft montierbar ist und den Setzaufwand einer Befestigungsvorrichtung reduziert. Ferner soll eine chemisch verankerbare Befestigungsvorrichtung mit einem Befestigungselement mit zumindest einem Verankerungselement sowie eine Befestigungsanordnung mit einer derartigen Befestigungsvorrichtung geschaffen werden, bei denen der Setzaufwand reduziert ist.

Diese Aufgabe ist für ein Verankerungselement, für eine Befestigungsvorrichtung und für eine Befestigungsanordnung durch die Merkmale der unabhängigen Ansprüche gelöst. Vorteilhafte Weiterbildungen sind in den Unteransprüchen dargelegt.

Gemäss der Erfindung ist das Verankerungselement durch ein Band gebildet, das sich über einen Winkelbereich von mehr als 360° um die Durchführöffnung erstreckt.

Das Band umgibt im montierten Zustand den Schaft des Befestigungselementes zumindest einmal vollständig, wobei der radial innere Rand des Bandes zumindest bereichsweise in die Aussenprofilierung des Schafts eingreift. Vorteilhaft erstreckt sich das Band über einen Winkelbereich eines Mehrfachen von 360° um die Durchführöffnung. Mit dem als Band ausgebildeten Verankerungselement lässt sich eine Steigung der Aussenprofilierung am Schaft ausgleichen. Eine Justierung eines zumindest ein Verankerungselement aufweisendes Befestigungselementes nach dem Setzen in einem Bohrloch erübrigt sich in den meisten Fällen beziehungsweise ist leicht vorzunehmen.

Die Durchführöffnung weist vorteilhaft eine auf den Schaft des Befestigungselementes abgestimmte Form auf und kann somit auch eine von einem Kreis abweichende Ausgestaltung aufweisen. Vorteilhaft weist das Band entlang seiner Längserstreckung eine konstante Bandbreite auf, womit die Durchführöffnung konzentrisch zu der den äusseren Umfang des Verankerungselementes beziehungsweise des radial äusseren Randes des Bandes bildenden Hülllinie angeordnet ist. In einer alternativen Ausführung weist das Band entlang seiner Längserstreckung eine variierende Bandbreite auf, so dass die Breite des Materialabschnitts zwischen der radialen Begrenzung der Durchführöffnung und der den äusseren Umfang des Verankerungselementes bildenden Hülllinie in Umfangrichtung variiert.

Vorzugsweise ist das Band schraubenlinienförmig ausgebildet und weist somit eine helixartige Ausgestaltung auf. Dieses Verankerungselement lässt sich einfach an einem Schaft eines Befestigungselementes anordnen. Die Steigung des Bandes wird vorteilhaft grösser als die allenfalls vorhandene Steigung der Aussenprofilierung des Schafts gewählt. In Abhängigkeit der Steigung des schraubenlinienförmigen Bandes ergibt sich die vorteilhafte Führung beziehungsweise Ausrichtung des Befestigungselementes im gesetzten Zustand im Bohrloch.

Bevorzugt weist das Band eine unrunde Aussenkontur auf, die über einen Winkelbereich von 360° zumindest zwei Wendepunkte aufweist, womit die Aussenkontur umfänglich nicht vollständig an der Bohrlochwandung anliegt. Beim Einführen eine Befestigungselementes mit einem derartigen Verankerungselement streift nur ein Abschnitt des Verankerungselementes entlang der Wandung des Bohrlochs, womit weniger Kraft und somit weniger Aufwand zum Setzen des Befestigungselementes erforderlich ist. Neben einer im Grundriss ovalen Ausgestaltung der Aussenkontur mit zwei Wendepunkten kann das Band auch eine Ausgestaltung der Aussenkontur mit drei oder mehr Wendepunkten aufweisen. Vorteilhaft sind die Ecken der Wendepunkte abgerundet. Weiter vorteilhaft verlaufen die Bandabschnitte zwischen zwei Wendepunkten bogenförmig.

Vorzugsweise weist das Band zusätzlich zur unrunden Aussenkontur eine unrunde Innenkontur auf, die über einen Winkelbereich von 360° zumindest zwei Wendepunkte aufweist, womit das Band nur abschnittsweise am Schaft des Befestigungselementes anliegt und bereichsweise zur Aussenseite des Schafts beabstandet ist. Im Bereich des zum Schaft beabstandeten Bandabschnitts werden Durchtrittsöffnungen für die aushärtbare Masse geschaffen. Neben einer im Grundriss ovalen Ausgestaltung der Innenkontur mit zwei Wendepunkten kann das Band auch eine Ausgestaltung der Innenkontur mit drei oder mehr Wendepunkten aufweisen. Vorteilhaft sind die Ecken der Wendepunkte abgerundet. Weiter vorteilhaft verlaufen die Bandabschnitte zwischen zwei Wendepunkten bogenförmig.

Bevorzugt sind die Wendepunkte zweier benachbarter Windungen des Bandes um einen Versatzwinkel zueinander angeordnet, womit eine vorteilhafte Reinigung der Wandung des Bohrlochs bei einem geringen Kraftaufwand zum Setzen gewährleistet ist. Dies ist durch die über die Längserstreckung des Bandes radial verteilte Anordnung der mit der Wandung des Bohrlochs in Anlage kommenden Abschnitte des Bandes sichergestellt.

Vorteilhaft ist dieser Versatzwinkel nach folgender Formel bestimmt,

$$\alpha = \frac{360 \cdot n}{\xi \cdot \omega} \ [°]$$

wobei

$n$, der Anzahl der gewünschten Wiederholungskontakte der radialen Aussenseite einer Windung des Bandes mit der Bohrlochwandung entspricht. Bevorzugt sind zwei oder mehr Wiederholungskontakte pro Windung;

$\xi$, der Gesamtanzahl der Windungen im Grundriss über 360° beziehungsweise der Funktion entspricht,

$$\xi = \frac{h_{Helix}}{P_{Helix}}$$

wobei h die axiale Gesamthöhe des Bandes und P die Steigung einer Windung des Bandes beschreibt;

$\omega$, der Anzahl der Wendepunkte in einer Windung im Grundriss über 360°. Weist das Band im Grundriss eine ovale Ausgestaltung auf, so entspricht die Anzahl der Wendepunkte 2. Entsprechend ist die Anzahl der Wendepunkte bei einem 3er-Polygon 3, bei einem 4er-Polygon 4, bei einer Kleeblattform 4, bei einem Pentagon 5, etc.;

$\alpha$, der Versatzwinkel, d.h. der Winkel, um den die Wendepunkte zweier benachbarter Windungen des Bandes zueinander versetzt sind.

In einer alternativen erfindungsgemässen Ausführungsform umfasst das Band mehrere ringscheibenförmige Elementteile, die an einander benachbarten Umfangsabschnitten beziehungsweise Randabschnitten miteinander verbunden sind. Vorteilhaft sind die ringscheibenförmigen Elemente alternierend, jeweils an einander radial gegenüberliegenden Umfangsabschnitten miteinander zu dem Verankerungselement verbunden, so dass dieses ziehharmonikaartig in der Länge z. B. zur Anpassung an eine Verankerungslänge des Befestigungselementes durch Zusammendrücken beziehungsweise durch Auseinaderziehen anpassbar ist. Die Durchführöffnung für den Schaft des Befestigungselementes ist durch die inneren Öffnungen der ringscheibenförmigen Elementteile gebildet. Die ringscheibenförmigen Elementteile sind beispielsweise einteilig ausgebildet und werden zur Ausbildung des Verankerungselementes entsprechend gefaltet. In einer alternativen Ausführung sind die ringscheibenförmigen Elementteile über einen Befestigungspunkt, z. B. Löt- oder Klebepunkt, beziehungsweise über ein Klemm- oder Haltemittel miteinander verbunden.

Vorzugsweise ist der radial äussere Rand des Bandes mit einer Profilierung versehen, welche eine einfache Anpassung des Verankerungselementes an die Ausgestaltung des Bohrlochs gewährleistet. Beispielsweise wird die Profilierung durch nach radial aussen offene Ausnehmungen gebildet. Die Ausnehmungen sind vorteilhaft als einseitig begrenzte Schlitze ausgebildet, die sich ausgehend vom äusseren Rand in Richtung der Durchführöffnung erstrecken. Die zwischen den Ausnehmungen liegenden Abschnitte des Verankerungselementes bilden leicht auslenkbare Lamellen aus, womit auch bei einem Verankerungselement aus einem sehr steifen Material die Anpassbarkeit an ein Bohrloch beim Einführen in dasselbe gegeben ist. Weiter vorteilhaft sind unterschiedliche Arten von Ausnehmungen am äusseren Rand des Verankerungselementes vorgesehen. Beispielsweise ist eine erste Art von Schlitzen vorgesehen, welche am äusseren Rand bewegliche Lamellen ausbilden, und zwischen diesen Schlitzen ist eine zweite Art von Schlitzen vorgesehen, welche den dazwischen liegenden Rand des Verankerungselementes auffächern.

Bevorzugt ist der radial innere Rand des Bandes mit einer Profilierung versehen, welche eine einfache Anpassung des Verankerungselementes an die Ausgestaltung der Aussenprofilierung des Schafts gewährleistet. Beispielsweise wird die Profilierung durch nach radial innen offene Ausnehmungen gebildet. Die Ausnehmungen sind vorteilhaft als einseitig begrenzte Schlitze ausgebildet, die sich ausgehend vom inneren Rand in Richtung des äusseren Randes des Bandes beziehungsweise nach radial aussen erstrecken. Die zwischen den Ausnehmungen liegenden Abschnitte des Verankerungselementes bilden leicht auslenkbare Lamellen aus, womit auch bei einem Verankerungselement aus einem sehr steifen Material die Anpassbarkeit an den Schaft des Befestigungselementes bei der Anordnung des Verankerungselementes an demselben gegeben ist. Weiter vorteilhaft sind unterschiedliche Arten von Ausnehmungen am inneren Rand des Verankerungselementes vorgesehen. Beispielsweise ist eine erste Art von Schlitzen vorgesehen, welche am inneren Rand bewegliche Lamellen ausbilden, und zwischen diesen Schlitzen ist eine zweite Art von Schlitzen vorgesehen, welche den dazwischen liegenden Rand des Bandes auffächern.

In einer vorteilhaften, flexiblen Ausführung des Verankerungselementes sind der innere Rand und der äussere Rand des Bandes jeweils mit einer Profilierung versehen, wobei die Profilierungen sich in einer radialen Richtung zumindest bereichsweise überlappen können.

Vorzugsweise weist das Band entlang seiner Erstreckung eine wellige Ausgestaltung auf, welche eine ausreichende Steifigkeit des Verankerungselementes insbesondere beim Einführen in ein Bohrloch gewährleistet. Die Welligkeit des Bandes ist beispielsweise in Richtung der Längserstreckung und/oder der Quererstreckung vorgesehen.

Für eine vorteilhafte Verankerung des Verankerungselementes an der Wandung des Bohrlochs beträgt die Dicke des Bandes vorteilhaft 0.01 mm bis 2 mm, besonders vorteilhaft 0.05 mm bis 1 mm.

Vorteilhaft weist das Band in der Bandebene unterschiedliche Dicken auf, womit sich das Verformungsverhalten des Verankerungselementes insbesondere beim Einführen in ein Bohrloch vorteilhaft anpassen lässt. In einer besonders vorteilhaften Ausführung nimmt die Dicke ausgehend von der Durchführöffnung in radialer Richtung nach aussen zu, so dass im Kontaktbereich des Verankerungselementes mit der Bohrlochwandung eine vorteilhaft grosse Materialmenge für eine mechanische Verankerung des Befestigungselementes zur Verfügung steht. In einer anderen vorteilhaften Ausführung nimmt die Dicke ausgehend vom äusseren Rand in radialer Richtung zur Durchführöffnung zu, so dass im Kontaktbereich des Verankerungselementes mit dem Schaft eine vorteilhaft grosse Materialmenge für die Fixierung des Verankerungselementes am Schaft zur Verfügung steht. Weiter kann die Dicke des Bandes auch einerseits ausgehend von der Durchführöffnung in radialer Richtung nach aussen sowie andererseits ausgehend vom äusseren Rand in radialer Richtung zur Durchführöffnung zunehmen, so dass der Bereich des Bandes mit der grössten Materialdicke zwischen dem äusseren und dem inneren Rand des Bandes liegt.

Bevorzugt ist im Band zumindest eine Durchgangsöffnung für eine aushärtbare Masse vorgesehen, wodurch beim Einführen des Verankerungselements in ein zuvor befülltes Bohrloch der verdrängte Anteil der aushärtbaren Masse einfach das Verankerungselement durchdringen und dieses vollständig umhüllen kann. Wird das Bohrloch erst nach dem Einführen eines Befestigungselementes befüllt, kann durch die zumindest eine Durchgangsöffnung die eingegossene Masse weitgehend unbehindert bis zum Bohrlochgrund fliessen. In einer vorteilhaften Ausführung ist die zumindest eine Durchgangsöffnung am äusseren Umfang des Verankerungselementes vorgesehen. Alternativ oder ergänzend dazu wird im Verankerungselement beziehungsweise in der Bandebene zumindest eine, umfänglich geschlossene Durchgangsöffnung für die aushärtbare Masse vorgesehen. Besonders vorteilhaft sind mehrere Durchgangsöffnung entlang der Längserstreckung des Bandes beabstandet zueinander vorgesehen, welche weiter vorteilhaft in Bezug auf mehrere Windungen von Windung zu Windung versetzt zueinander angeordnet sind, womit eine vorteilhafte Verankerung in der ausgehärteten Masse und Aussteifung der ausgehärteten Masse gewährleistet ist,

Vorteilhaft ist das Band aus einem Metall, vorteilhaft aus einem Stahlblech gefertigt, womit das Verankerungselement eine ausreichende Steifigkeit aufweist. Eine einfache und wirtschaftliche Herstellung des Verankerungselementes lässt sich insbesondere mit einem Stanz-/Biegeverfahren gewährleisten. Alternativ wird das bandförmige Verankerungselement in einem Wickelverfahren gefertigt.

In einer alternativen, vorteilhaften Ausführungsform ist das Band aus einem Kunststoff, vorteilhaft aus einem faserverstärktem Kunststoff gefertigt. Eine einfache und wirtschaftliche Herstellung des Verankerungselementes lässt sich insbesondere mit einem Spritzgussverfahren gewährleisten.

In einer weiteren vorteilhaften Ausführung ist das Verankerungselement aus einem nicht leitenden Material gefertigt. In Anwendungen, in denen keine Ströme übertragen werden sollen, z. B. bei Befestigungen von Eisenbahnschwellen, gewährleistet dieses bandför-mige Verankerungselement einen ausreichenden Ab-stand zwischen dem Schaft und der Bohrlochwandung und verhindert ein Fliessen von Strom von dem Bauteil in den Schaft des Befestigungselementes.

In einer Alternative kann das Band aus einem anderen Material als Metall oder Kunststoff gefertigt sein, sofern dieses Material eine ausreichende mechanische Verankerung eines Befestigungselementes im Bohrloch bis zum Aushärten der aushärtbaren Masse gewährleistet.

Die erfindungsgemässe, mittels einer aushärtbaren Masse in einem Bohrloch verankerbare Befestigungsvorrichtung weist ein Befestigungselement, das einen mit einer Aussenprofilierung versehenen Schaft aufweist, und zumindest ein Verankerungselement mit einer Durchführöffnung für den Schaft auf, wobei das Verankerungselement von einem Band gebildet ist, das sich über einen Winkelbereich von mehr als 360° um die Durchführöffnung erstreckt.

Diese Befestigungsvorrichtung lässt sich einfach herstellen und ermöglicht eine einfache Montage in einem Bohrloch eines Bauteils, wie z. B. in einer Wand oder einer Decke. Die Aussenprofilierung des Schafts des Befestigungselementes ist beispielsweise ein Gewinde.

Das zumindest eine bandförmige Veranke-rungselement der Befestigungsvorrichtung kann einzel-ne sowie auch sämtliche Merkmale des zuvor beschriebenen Verankerungselementes aufweisen.

Bevorzugt sind mehrere Verankerungselemente beabstandet zueinander an einem Befestigungselement vorgesehen, womit eine vorteilhafte mechanische Verankerung der Befestigungsvorrichtung, eine einfache Ausrichtung des Befestigungselementes im Bohrloch sowie eine vorteilhafte Bewehrung der ausgehärteten Masse gewährleistet ist.

Vorzugsweise sind verschiedene Ausgestaltungen von Verankerungselementen an einem Befestigungselement vorgesehen, womit sich in verschiedenen Verankerungstiefen unterschiedliche Verankerungsei-genschaften bedarfsweise miteinander kombinieren las-sen. Beispielsweise werden bandförmige Verankerungs-elemente mit hülsenförmigen oder ringscheibenförmigen Verankerungselementen an einem Schaft kombiniert.

Die erfindungsgemässe Befestigungsanordnung zur Verankerung einer Befestigungsvorrichtung mittels einer aushärtbaren Masse in einem Bohrloch, das einen Nenndurchmesser (N) aufweist, weist die Befestigungsvorrichtung mit einem Befestigungselement und mit zumindest einem an dem Befestigungselement angeordneten Verankerungselement auf, wobei das Ver-ankerungselement einen maximalen Aussendurchmes-ser aufweist, der grösser als der Nenndurchmesser des Bohrlochs ist.

Beim Einführen der Befestigungsvorrichtung in das Bohrloch erfolgt durch das Streifen des Veranke-rungselementes entlang der Bohrlochwandung gleich-zeitig eine Reinigung des Bohrlochs, wobei das anfallende Bohrmehl am Bohrlochgrund und gegebenenfalls in der aushärtbaren Masse gesammelt wird und nicht mehr zu einem grossen Teil in die Umgebungsluft entweicht. Eine separate Reinigung des Bohrlochs vor dem Setzen der Befestigungsvorrichtung beziehungsweise des Befestigungselementes ist nicht mehr erforderlich, wobei trotzdem hohe Endlasten mit der verankerten Befestigungsvorrichtung erreicht werden. Des Weiteren gewährleistet das zumindest eine Verankerungselement einen Spritzschutz beim Einführen der Befestigungsvorrichtung in das Bohrloch gegen herausspritzende aushärtbare Masse.

Durch den Wegfall des Reinigungsschritts wird die Anwendungssicherheit erhöht und das Setzen der Befestigungsvorrichtung beschleunigt. Es werden keine zusätzlichen Geräte benötigt und die Umgebungsluft wird nicht durch Bohrmehl zusätzlich belastet. Des Wei-teren gewährleisten Befestigungsvorrichtungen mit ei-nem derartigen Verankerungselement eine ausreichen-de Überdeckung des Schafts entlang dessen gesamte Verankerungslänge mit der aushärtbaren Masse im Bohrloch.

Das zumindest eine bandförmige Veranke-rungselement beziehungsweise die Befestigungsvor-richtung kann einzelne sowie auch sämtliche Merkmale des zuvor beschriebenen Verankerungselementes be-ziehungsweise der zuvor beschriebenen Befestigungs-vorrichtung aufweisen.

Die Erfindung wird nachstehend anhand von Ausführungsbeispielen näher erläutert. Es zeigen:

Fig. 1    Ein erstes Ausführungsbeispiel eines Verankerungselementes in Seitenansicht;

Fig. 2    ein zweites Ausführungsbeispiel eines Verankerungselementes in Seitenansicht;

Fig. 3    ein drittes Ausführungsbeispiel eines Verankerungselementes im Grundriss;

Fig. 4    das in Fig. 3 gezeigte Verankerungselement in einer teilweisen Längsansicht,

Fig. 5    ein viertes Ausführungsbeispiel eines Verankerungselementes im Grundriss;

Fig. 6    eine Befestigungsanordnung mit einer Befestigungsvorrichtung im Schnitt;

Fig. 7    eine Variante einer schematisch dargestellten Befestigungsvorrichtung in einer Seitenansicht;

Fig. 8 eine weitere Variante einer Befestigungsvorrichtung im Schnitt; und

Fig. 9 ein weiteres Beispiel einer Befestigungsvorrichtung in einer Seitenansicht.

Grundsätzlich sind in den Figuren gleiche Teile mit den gleichen Bezugszeichen versehen.

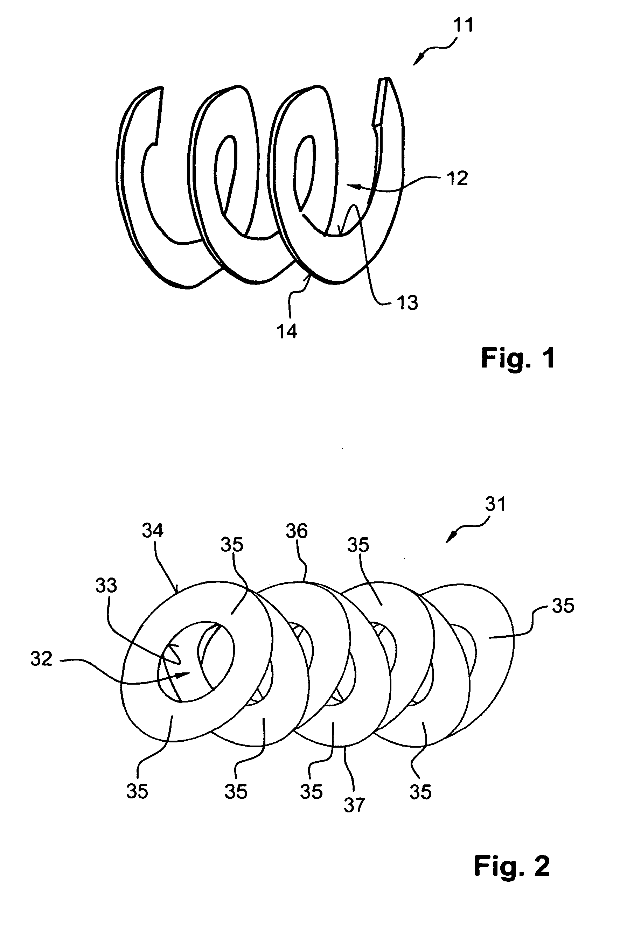

Das in der Figur 1 dargestellte aus einem Band gebildete, schraubenlinienförmige Verankerungselement 11 weist eine Durchführöffnung 12 für einen Schaft auf und erstreckt sich über einen Winkelbereich von mehr als 360°, in diesem Ausführungsbeispiel dreimal um die Durchführöffnung 12, was einem Winkelbereich von 1080° entspricht. Die Erstreckung des aus einem Band gebildeten Verankerungselementes 11 muss nicht zwingend einem ganzzahligen Mehrfachen von 360° entsprechen. Beispielsweise erstreckt sich das Band über einen Winkelbereich von 480°, womit sich das 1.3-fach um die Durchführöffnung 12 erstreckt. Das Verankerungselement 11 ist zur Anpassung an örtliche Gegebenheiten oder unterschiedlichen Lastfällen einfach z. B. durch Ablängen anpassbar.

Das Verankerungselement 11 weist einen der Durchführöffnung 12 zugewandten, inneren Rand 13 sowie einen der Durchführöffnung 12 abgewandten, äusseren Rand 14 auf. Das Verankerungselement 11 ist aus einem Metall, vorteilhaft aus einem Stahlblech, in einem Stanz-/Biegeverfahren gefertigt.

Das in der Figur 2 dargestellte bandförmige Verankerungselement 31 umfasst mehrere ringscheibenförmige Elementteile 35, die an einander benachbarten Umfangsabschnitten 36 bzw. 37 miteinander verbunden sind. Das bandförmige Verankerungselement 31 erstreckt sich über einen Winkelbereich von mehr als 360°, in diesem Ausführungsbeispiel siebenmal um die Durchführöffnung 32, was einem Winkelbereich von 2050° entspricht. Jedes Elementteil 35 des Verankerungselementes 31 weist einen der Durchführöffnung 32 zugewandte, innere Rand 33 sowie einen der Durchführöffnung 32 abgewandten, äusseren Rand 34 auf. Das Verankerungselement 31 ist vorteilhaft aus einem Kunststoff, vorteilhaft aus einem faserverstärktem Kunststoff, in einem Spritzgussverfahren gefertigt. Die einzelnen ringscheibenförmigen Elementteile 35 sind beispielsweise über separate Verbindungspunkte, wie Löt- oder Schweisspunkte miteinander zu dem Verankerungselement 31 verbunden.

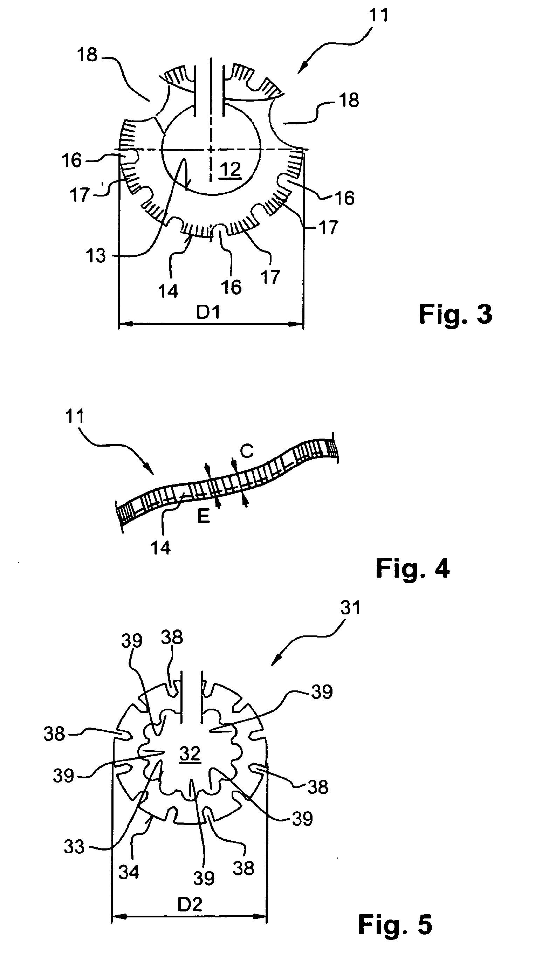

Nachfolgend werden anhand der Figuren 3 bis 5 verschiedene Arten von Profilierungen beschrieben, wobei die in den Figuren 1, 2, 8 und 9 dargelegten Verankerungselemente 11, 31, 81 und 101 alle oder zumindest Teile von diesen Ausgestaltungen aufweisen können.

In der Figur 3 und 4 ist der äussere Rand 14 des bandförmigen Verankerungselementes 11 mit einer Profilierung in Form von nach radial aussen offenen Ausnehmungen 16 versehen, welche mehrere leicht auslenkbare Lamellen ausbilden. Zwischen dem grössten Teil dieser Ausnehmungen 16 sind ausgehend vom äusseren Rand 14 mehrere nach radial innen gerichtete Schlitze 17 vorgesehen, die den freien Rand des Verankerungselementes 11 bereichsweise auffächern und somit eine einfache Anpassung desselben an die Bohrlochwandung ermöglichen. Am äusseren Rand 14 des bandförmigen Verankerungselementes 11 sind weiter zwei Durchgangsöffnungen 18 für eine aushärtbare Masse vorgesehen. Das Verankerungselement 11 weist einen Aussendurchmesser D1 auf.

Das Verankerungselement 11 weist in der Scheibenebene eine wellige Ausgestaltung auf (Fig. 4). Das Verankerungselement 11 weist in der Bandebene unterschiedliche Dicken C und E auf, wobei die Dicke ausgehend von der Durchführöffnung 12 in radialer Richtung nach aussen zunimmt.

In der Figur 5 ist der äussere Rand 34 des bandförmigen Verankerungselementes 31 mit einer Profilierung in Form von nach radial aussen offenen Ausnehmungen 38 versehen, welche mehrere leicht auslenkbare Lamellen ausbilden. Zusätzlich ist der innere Rand 33 des bandförmigen Verankerungselementes 31 ebenfalls mit einer Profilierung versehen, die durch mehrere, umfänglich zueinander beabstandete und nach radial innen offene Ausnehmungen 39 gebildet ist. Das Verankerungselement 31 weist einen Aussendurchmesser D2 auf.

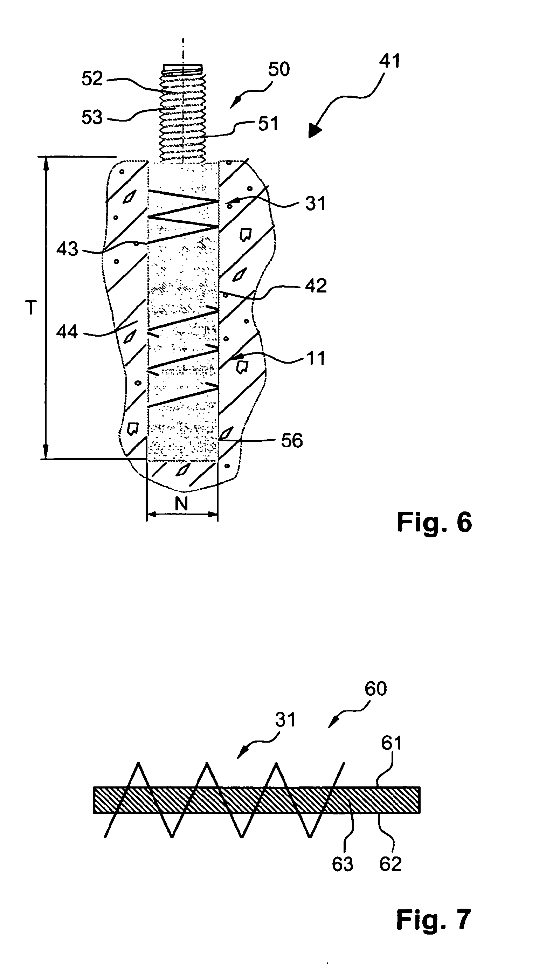

In der Figur 6 ist eine Befestigungsanordnung 41 zur Verankerung einer Befestigungsvorrichtung 50 in einem Bohrloch 42 mittels einer aushärtbaren Masse 43 gezeigt.

Die Befestigungsvorrichtung 50 weist ein Befestigungselement 51 mit einem Schaft 52, der mit einem Aussengewinde als Aussenprofilierung 53 versehen ist, sowie zwei zueinander beabstandete Verankerungselemente 11 und 31 auf, welche wie zuvor beschrieben ausgebildet sind. In einem Abstand zu dem Verankerungselement 31 ist am setzrichtungsseitigen Ende 56 des Schafts 52 das bandförmige Verankerungselement 11 vorgesehen.

Zum Setzen der Befestigungsvorrichtung 50 wird in dem Bauteil 44 zuerst ein Bohrloch 42 mit einem Bohrer erstellt, wobei der Nenndurchmesser N des erstellten Bohrlochs 42 kleiner als der Aussendurchmesser D1 des Verankerungselementes 11 sowie kleiner als der Aussendurchmesser D2 des Verankerungselementes 31 gewählt ist. Die Bohrlochtiefe T wird einerseits durch die erforderliche Verankerungslänge für das Befestigungselement 51 und andererseits durch den erforderlichen Raum vor dem Befestigungselement 51 zur Aufnahme von Bohrmehl im Bohrloch 42 bestimmt.

Anschliessend wird das Bohrloch 42 mit einer definierten Menge der aushärtbaren Masse 43 befüllt und dann die Befestigungsvorrichtung 50 mit dem setzrichtungsseitigen Ende 56 des Schafts 52 des Befestigungselementes 51 voran in das Bohrloch 42 eingeführt, wobei das Einführen manuell oder auch maschinell erfolgt. Dabei streifen die am Schaft 52 des Befestigungselementes 51 angeordneten Verankerungselemente 11 und 31 entlang der Bohrlochwandung, so dass daran anhaftendes Bohrmehl zum grössten Teil von diesen entfernt und in die aushärtbare Masse 43 eingemischt beziehungsweise zum Bohrlochgrund hin bewegt wird. Die Verankerungselemente 11 und 31 sind beispielsweise auf den Schaft 52 des Befestigungselementes 51 aufgeschoben oder werden z. B. auf diesen aufgeschraubt. Beim Einführen der Befestigungsvorrichtung 50 durchströmt und umspült die aushärtbare Masse 43 die Verankerungselemente 11 und 31 durch die Durchgangsöffnungen 18 und Ausnehmungen 16 bzw. 38 und 39, so dass die aushärtbare Masse 43 und allenfalls darin befindliches Bohrmehl gleichmässig durchmischt wird und die Verankerungselemente 11 und 31 nach dem Aushärten der Masse 43 weitgehend vollständig in dieser eingebettet sind.

Alternativ wird zuerst die Befestigungsvorrichtung 50 in das Bohrloch 42 eingeführt und anschliessend die aushärtbare Masse 43 eingebracht. In einer weiteren Alternative wird zuerst eine kleine, bestimmte Menge der aushärtbaren Masse 43 in das Bohrloch 42 eingebracht, die Befestigungsvorrichtung 50 in das Bohrloch 42 eingeführt und anschliessend ein noch verbleibender Freiraum des Bohrlochs 42 mit einer weiteren Menge der aushärtbaren Masse 43 aufgefüllt.

Weiter kann der Schaft 52 des Befestigungselementes 51 mit einer Injektionsbohrung versehen sein, durch welche die aushärtbare Masse 43 nach dem Einführen oder während demselben in das Bohrloch 42 einbringbar ist.

Vor dem Aushärten der aushärtbaren Masse 43 ist die Befestigungsvorrichtung 50 und somit das Befestigungselement 51 bereits auf einem beschränkten Lastniveau belastbar, da die Verankerungselemente 11 und 81 das Befestigungselement 51 mechanisch im Bohrloch 42 verankern. Nach dem Aushärten der aushärtbaren Masse 43 ist die gesetzte Befestigungsvorrichtung 50 auf das maximal zulässige Lastniveau belastbar.

Da der äussere Rand 14 des Verankerungselementes 11 beziehungsweise der äussere Rand 34 des Verankerungselementes 31 weiterhin zumindest bereichsweise in die Bohrlochwandung eingreifen, steht eine ausreichende Kontaktfläche zur Verfügung, womit die Befestigungsanordnung 41 auch in gerissenem Beton anwendbar ist.

Anstelle unterschiedlicher Verankerungselemente 11 und 31 können auch mehrere gleichartige Verankerungselemente 11 oder 31 an einem Schaft vorgesehen sein. In Abhängigkeit der Anforderungen an das gesetzte Befestigungselement kann auch nur ein Verankerungselement an dem Schaft des Befestigungselementes 51 vorgesehen sein.

Die in der Fig. 7 gezeigte Befestigungsvorrichtung 60 weist an dem mit einem Gewinde als Aussenprofilierung 63 versehenen Schaft 62 des Befestigungselementes 61 ein bandförmiges Verankerungselement 31 auf, das aus mehreren ringscheibenförmigen, an einander benachbarten Umfangsabschnitten miteinander verbunden Elementteile 35 gebildet ist.

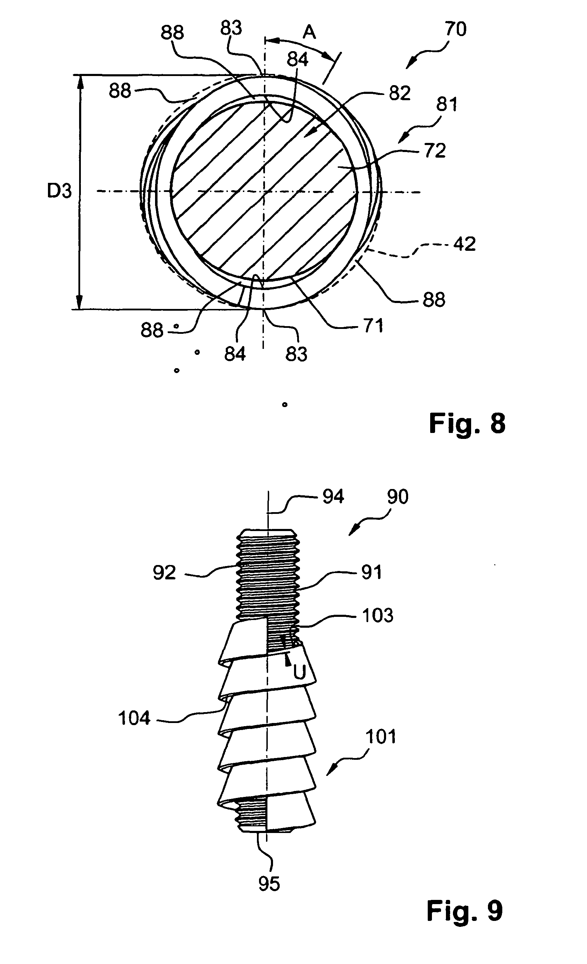

Die in der Fig. 8 gezeigte Befestigungsvorrichtung 70 weist als Verankerungselement 81 ein Band auf, das sich über einen Winkelbereich von mehr als 360° um die Durchführöffnung 82 erstreckt. Das Band weist eine unrunde Aussenkontur sowie eine unrunde Innenkontur auf, die jeweils über einen Winkelbereich von 360° zumindest zwei Wendepunkte 83 bzw. 84 aufweisen. Die Wendepunkte 83 bzw. 84 zweier benachbarter Windungen des bandförmigen Verankerungselementes 81 sind in diesem Ausführungsbeispiel um einen Versatzwinkel (A) von 12.5° zueinander angeordnet. Die Wendepunkte 83 bzw. 84 sind jeweils abgerundet und die Abschnitte des bandförmigen Verankerungselementes 81 verlaufen jeweils bogenförmig. Die Freiräume zwischen dem bandförmigen Verankerungselement 81 und der Aussenseite des Schafts 72 des Befestigungselementes 71 sowie zwischen dem bandförmigen Verankerungselement 81 und der Wandung des Bohrlochs 42 bilden Durchgangsöffnungen 88 für die aushärtbare Masse aus. Der maximale Aussendurchmesser D3 des Verankerungselementes 81 ist grösser als der Nenndurchmesser des Bohrlochs ausgebildet, in das die Befestigungsvorrichtung 70 gesetzt wird.

Die in Fig. 9 dargestellte, jedoch nicht abschliessende Variante einer Befestigungsvorrichtung 70 weist ein Befestigungselement 91 mit einem Schaft 92, der mit einem Aussengewinde als Aussenprofilierung versehen ist, sowie ein bandförmiges Verankerungselement 101 auf, welches schraubenlinienförmig ausgebildet ist. Der äussere Rand 104 des bandförmigen Verankerungselementes 101 ragt in einem spitzen Winkel zu der Längsachse 94 des Befestigungselementes 91 von der Aussenseite des Schafts 92 ab, so dass mehrere, sich in Richtung des Endes 95 des Schafts 92 erweiternde Konen ausgebildet sind. Der äussere Rand 104 weist mit dem zu diesem benachbarten inneren Rand 103 des Verankerungselementes 101 eine Überlappung U auf. Durch die konusähnliche Ausgestaltung des Verankerungselementes 101 weist diese Befestigungsvorrichtung 90 ein vorteilhaftes Nachspreizverhalten auf und ist somit auch in einem gerissenen Untergrund, wie z. B. in Beton geeignet.

**Patentansprüche**

1. Verankerungselement zur Anordnung an einem mit einer Aussenprofilierung (53; 63) versehenen Schaft (52; 62; 72; 92) eines Befestigungselementes (51; 61; 71; 91) mit einer Durchführöffnung (12; 32; 82) für den Schaft (52; 62; 72; 92), **gekennzeichnet durch**
ein Band, das sich über einen Winkelbereich von mehr als 360° um die Durchführöffnung (12; 32; 82) erstreckt.

**2.** Verankerungselement nach Anspruch 1, **dadurch gekennzeichnet, dass** das Band schraubenlinienförmig ausgebildet ist.

**3.** Verankerungselement nach Anspruch 1 oder 2, **dadurch gekennzeichnet, dass** das Band eine unrunde Aussenkontur aufweist, die über einen Winkelbereich von 360° zumindest zwei Wendepunkte (83) aufweist.

**4.** Verankerungselement nach Anspruch 3, **dadurch gekennzeichnet, dass** das Band eine unrunde Innenkontur aufweist, die über einen Winkelbereich von 360° zumindest zwei Wendepunkte (84) aufweist.

**5.** Verankerungselement nach Anspruch 3 oder 4, **dadurch gekennzeichnet, dass** die Wendepunkte (83; 84) zweier benachbarter Windungen des Bandes um einen Versatzwinkel zueinander angeordnet sind.

**6.** Verankerungselement nach Anspruch 1, **dadurch gekennzeichnet, dass** das Band mehrere ringscheibenförmige Elementteile (35) umfasst, die an einander benachbarten Umfangsabschnitten (36, 37) miteinander verbunden sind.

**7.** Verankerungselement nach einem der Ansprüche 1 bis 6, **dadurch gekennzeichnet, dass** der radial äussere Rand (14; 34) und/oder der radial innere Rand (13; 33) des Bandes mit einer Profilierung versehen ist.

**8.** Verankerungselement nach einem der Ansprüche 1 bis 7, **dadurch gekennzeichnet, dass** das Band entlang seiner Erstreckung eine wellige Ausgestaltung aufweist.

**9.** Verankerungselement nach einem der Ansprüche 1 bis 8, **dadurch gekennzeichnet, dass** im Band zumindest eine Durchgangsöffnung (18) für eine aushärtbare Masse (43) vorgesehen ist.

**10.** Befestigungsvorrichtung, die mittels einer aushärtbaren Masse (43) in einem Bohrloch (42) verankerbar ist, mit einem Befestigungselement (51; 61; 71; 91), das einen mit einer Aussenprofilierung (53; 63) versehenen Schaft (52; 62; 72; 92) aufweist, und mit zumindest einem Verankerungselement (11; 31; 81; 101) nach einem der Ansprüche 1 bis 9.

**11.** Befestigungsvorrichtung nach Anspruch 10, **dadurch gekennzeichnet, dass** mehrere Verankerungselemente (11; 31) beabstandet zueinander an einem Schaft (52) vorgesehen sind.

**12.** Befestigungsvorrichtung nach Anspruch 10 oder 11, **dadurch gekennzeichnet, dass** verschiedene Ausgestaltungen von Verankerungselementen (11, 31) an einem Schaft (52) vorgesehen sind.

**13.** Befestigungsanordnung (41) zur Verankerung einer Befestigungsvorrichtung (50; 60; 70; 90) nach einem der Ansprüche 10 bis 12 mittels einer aushärtbaren Masse (43) in einem Bohrloch (42), das einen Nenndurchmesser (N) aufweist, wobei das zumindest eine an dem Befestigungselement (51; 61; 71; 91) angeordnete Verankerungselement (11; 31; 81; 101) einen maximalen Aussendurchmesser (D1; D2; D3) aufweist, der grösser als der Nenndurchmesser (N) des Bohrloches (42) ist.

**Claims**

**1.** Anchoring element for arranging on a shaft (52; 62; 72; 92) provided with external profiling (53; 63) of a fastening element (51; 61; 71; 91) with a through opening (12; 32: 82) for the shaft (52; 62; 72; 92), **characterised by** a band, which extends over an angle range of more than 360° around the through opening (12; 82; 32).

**2.** Anchoring element according to claim 1, **characterised in** the the band is made in the form of a helix.

**3.** Anchoring element according to claim 1 or 2, **characterised in that** the band has a noncircular external contour, which has at least two turning points over an angle range of 360°.

**4.** Anchoring element according to claim 3, **characterised in that** the band has a noncircular external contour, which has at least two turning points (84) over an angle range of 360°.

**5.** Anchoring element according to claim 3 or 4, **characterised in that** the turning points (83; 84) of two adjacent coils of the band are arranged at an offset angle to each other.

**6.** Anchoring element according to claim 1, **characterised in that** the band comprises several disc shaped elements (35), which are connected to each other at sections of the circumference, which are adjacent to each other (36; 37).

**7.** Anchoring element according to claims 1 to 6, **characterised in that** the radially external edge (14; 34) and/or the radially internal edge (13; 33) of the band is provided with profiling.

**8.** Anchoring element according to claims 1 or 7, **characterised in that** the band has a wavy arrangement along its first extension.

**9.** Anchoring element according to one of claims 1 to 8, **characterised in that** at least one through opening (18) for a mass (43), which may be hardened, is provided in the band.

**10.** Fastening device, which may be anchored in a hole (42) by means of a mass (43), which may be hardened, with a fastening element (51; 61; 71; 91), which has a shaft (52; 62; 72; 92) provided with external profiling (53; 63), and with at least one anchoring element (11; 31; 81; 101) according to one of claims 1 to 9.

**11.** Fastening device according to claim 10, **characterised in that** several anchoring elements (11; 31) are provided at a distance from each other on the shaft (52).

**12.** Fastening device according to claim 10 or 11, **characterised in that** various arrangements of anchoring elements (11, 31) are provided on a shaft (52).

**13.** Fastening arrangement (41) for anchoring a fastening device (50; 60; 70; 90) according to one of claims 10 to 12 by means of a mass (43), which may be hrdened, in a hole (42), which has a nominal diameter (14), in which
the at least one anchoring element (11; 31; 81; 101) arranged on the fastening element (51; 61; 71; 91) has a maximum external diameter (D1; D2; D3), which is greater than the nominal diameter (N) of the hole (42).


**Revendications**

**1.** Elément d'ancrage destiné à être agencé sur une tige (52 ; 62 ; 72 ; 92) d'un élément de fixation (51 ; 61 ; 71 ; 91) ayant un profil extérieur (53 ; 63), comportant une ouverture traversante (12 ; 32 ; 82) pour la tige (52 ; 62 ; 72 ; 92), **caractérisé par** une bande qui s'étend autour de l'ouverture traversante (13 ; 32 ; 82) sur une zone angulaire de plus de 360°.

**2.** Elément d'ancrage selon la revendication 1, **caractérisé en ce que** la bande est réalisée en forme d'hélice.

**3.** Elément d'ancrage selon la revendication 1 ou 2, **caractérisé en ce que** la bande présente un contour extérieur non circulaire qui comporte au moins deux points d'inflexion (83) sur une zone angulaire de 360°.

**4.** Elément d'ancrage selon la revendication 3, **caractérisé en ce que** la bande présente un contour intérieur non circulaire qui comporte au moins deux points d'inflexion (84) sur une zone angulaire de 360°.

**5.** Elément d'ancrage selon la revendication 3 ou 4, **caractérisé en ce que** les points d'inflexion (83 ; 84) de deux spires voisines de la bande sont agencés avec un angle de décalage l'un par rapport à l'autre.

**6.** Elément d'ancrage selon la revendication 1, **caractérisé en ce que** la bande comporte plusieurs éléments de forme annulaire (35) qui sont reliés les uns aux autres sur des sections circonférentielles voisines (36, 37).

**7.** Elément d'ancrage selon l'une quelconque des revendications 1 à 6, **caractérisé en ce que** le bord radialement extérieur (14 ; 34) et/ou le bord radialement intérieur (13 ; 33) de la bande présente un profilage.

**8.** Elément d'ancrage selon l'une quelconque des revendications 1 à 7, **caractérisé en ce que** la bande présente une forme ondulée le long de son extension.

**9.** Elément d'ancrage selon l'une quelconque des revendications 1 à 8, **caractérisé en ce qu'**au moins une ouverture traversante (18) est prévue dans la bande pour une masse durcissable (43).

**10.** Ensemble de fixation pouvant être ancré dans un trou percé (42) au moyen d'une masse durcissable (43), avec un élément de fixation (51 ; 61 ; 71 ; 91) comportant une tige (52 ; 62 ; 72 ; 92) ayant un profilage extérieur (53 ; 63), et ayant au moins un élément d'ancrage (11 ; 31 ; 81 ; 101) selon l'une quelconque des revendications 1 à 9.

**11.** Ensemble de fixation selon la revendication 10, **caractérisé en ce que** plusieurs éléments d'ancrage (11 ; 31) sont prévus sur une tige (52) à distance les uns des autres

**12.** Ensemble de fixation selon la revendication 10 ou 11, **caractérisé en ce que** différentes formes d'éléments d'ancrage (11, 31) sont prévues sur une tige (52).

**13.** Agencement de fixation (41) pour ancrer un ensemble de fixation (50 ; 60 ; 70 ; 90) selon l'une quelconque des revendications 10 à 12 au moyen d'une masse durcissable (43) dans un trou percé (42) ayant un diamètre nominal (N), dans lequel le au moins un élément d'ancrage (11 ; 31 ; 81 ; 101) agencé sur l'élément de fixation (51 ; 61 ; 71 ; 91) a un diamètre

extérieur maximal (doI ; D2 ; D3) qui est plus grand que le diamètre nominal (N) du trou percé (42).

11

**Fig. 1**

**Fig. 2**

18    11

16    18

17    12

13    16

14    16    17

D1

**Fig. 3**

11

C

E

14

**Fig. 4**

31

39    38

38    39

38    32

39    38

33    39

34    39    38

D2

**Fig. 5**

**Fig. 6**

**Fig. 7**

**Fig. 8**

**Fig. 9**

**IN DER BESCHREIBUNG AUFGEFÜHRTE DOKUMENTE**

**In der Beschreibung aufgeführte Patentdokumente**

- EP 1122449 A2
- DE 2423433 A1
- US 1688087 A